Europäisches Patentamt

European Patent Office

Office européen des brevets

(11) Veröffentlichungsnummer: **0 436 920 A2**

# (12) EUROPÄISCHE PATENTANMELDUNG

(21) Anmeldenummer: **90125340.1**

(22) Anmeldetag: **22.12.90**

(51) Int. Cl.5: **G01L 9/00, G01L 9/04**

(30) Priorität: **08.01.90 DE 4000326**

(43) Veröffentlichungstag der Anmeldung:
**17.07.91 Patentblatt 91/29**

(84) Benannte Vertragsstaaten:
**AT BE CH DE DK ES FR GB GR IT LI LU NL SE**

(71) Anmelder: **DEGUSSA AG**
**Weissfrauenstrasse 9**
**W-6000 Frankfurt (Main)(DE)**

(72) Erfinder: **Huck, Ralf**
**Grünaustrasse 11**
**W-6450 Hanau 9(DE)**
Erfinder: **Müller, Wolfgang**
**Nordstrasse 20**
**W-6456 Langenselbold(DE)**

(74) Vertreter: **Stoffregen, Hans-Herbert, Dr.**
**Dipl.-Phys.**
**Patentanwälte Strasse & Stoffregen**
**Salzstrasse 11a Postfach 2144**
**W-6450 Hanau/Main 1(DE)**

(54) **Drucksensor.**

(57) Es wird ein Drucksensor (38) mit auf einer Membran (16) angeordneten Dehnmeßstreifen (18, 20, 22, 24) wie Dickfilm-Dehnmeßstreifen, die zu vorzugsweise einer Wheatstone'schen Brücke verschaltet sind, vorgeschlagen, bei dem Zweige der Brückenschaltung Kompensationswiderstände (26, 28, 30, 32) aufweisen. Die Kompensationswiderstände sind außerhalb des aktiven Bereichs (17) der Membran angeordnet.

Fig.4

EP 0 436 920 A2

# DRUCKSENSOR

Die Erfindung bezieht sich auf einen Drucksensor mit auf einer Membran angeordnetem Dickfilm-Widerstandsmeßstreifen, die zu vorzugsweise einer Wheatstone'schen Brücke verschaltet sind, wobei Zweige der Brückenschaltung Kompensationswiderstände zum insbesondere Abgleich der Brücke in bezug auf das Ausgangssignal der Brücke (Nullsignal) und/oder den Temperaturgang des Ausgangs der Brücke aufweisen, die auf dem Drucksensor angeordnet sind.

Ein Drucksensor mit Dickfilm-Widerstandsmeßstreifen ist der DE-OS 29 40 441 zu entnehmen. Dabei werden die Dickfilm-Widerstandsdehnmeßstreifen im Siebdruckverfahren auf den aktiven Bereich einer randfest eingespannten Membran aufgebracht. Dieser aktive Bereich liegt innerhalb der Befestigung auf der Vorder- bzw. Rückseite der Membran, so daß Verformungen der Membran, die durch auf diese einwirkenden Druck bzw. Spannung auftreten, sich in einer Änderung der Widerstände äußert, so daß Rückschlüsse auf die mechanischen Einwirkungen auf die Membran gezogen werden können.

Die Dehnmeßstreifen sind zu einer Wheatstone'schen Brücke verschaltet, wobei bezüglich Temperaturgang und Nullsignal die Wheatstone'sche Brücke nicht abgleichbar ist. Daher werden Kompensationswiderstände zugeschaltet (s. z.B. DE-B 14 48 968; messen + prüfen/automatik, Dezember 1983, Seiten 745-750).

Bekannt ist es, Kompensationswiderstände auf der der Membran abgewandten Fläche einer starren Platte anzuordnen, die die Grundplatte des Drucksensors selbst bildet. Um die Kompensationswiderstände in die Brückenschaltung zu schalten, ist es erforderlich, eine niederohmige Verbindung zwischen der Membran und der der Membran abgewandten Seite der starren Platte herzustellen, was, insbesondere bei sehr dicken Basisplatten, erkennbar sehr aufwendig ist. Hinzu tritt der Nachteil, daß einige Kontaktmaterialien nicht thermisch belastbar sind. Die Kontaktierung kann aus ersichtlichen Gründen erst nach dem mechanischen Verbinden von Membran und starrer Platte erfolgen. Da die mechanische Verbindung jedoch in Form einer Glasfritte realisiert wird, scheiden alle höherschmelzenden Kontaktmaterialien aus.

Es sind auch Halbleiter-Drucksensoren bekannt (EP-A 0 198 695, DE-A 31 18 306, DE-A 32 07 833), bei denen außerhalb von membranartig ausgebildeten Bereichen Kompensationswiderstände vorgesehen sind. Entsprechende Drucksensoren zeigen jedoch neben herstellungstechnischen Problemen Nachteile in der Genauigkeit bzw. in bezug auf den zu überdeckenden Temperaturbereich.

Aufgabe der vorliegenden Erfindung ist es im wesentlichen, einen Drucksensor der eingangs genannten Art so weiterzubilden, daß problemlos Kompensationswiderstände zugeschaltet werden können, ohne daß Bohrungen insbesondere in der starren Platte oder ähnliches erforderlich sind. Gleichzeitig soll sichergestellt sein, daß der bzw. die auf den Drucksensor einwirkende Druck bzw. Spannung die Widerstandwerte der Kompensationswiderstände selbst nicht verändert.

Die Aufgabe wird erfindungsgemäß im wesentlichen dadurch gelöst, daß die Kompensationswiderstände auf der Membran außerhalb deren aktiven Bereichs angeordnet sind.

Erfindungsgemäß ist es folglich nicht mehr erforderlich, daß durch Bohrungen in der Träger- bzw. Basisplatte des Drucksensors durchkontaktiert wird. Folglich entfallen auch die Probleme der Wahl eines geeigneten Kontaktmaterials. Die Schaltung selbst kann nunmehr problemlos aufgebracht werden, insbesondere dann, wenn sämtliche Dickfilm-Widerstandsdehnmeßstreifen auf einer Seite der Membran verlaufen. In diesem Fall kann die Schaltung als Einheit auf der freien Fläche der Membran z.B. im Siebdruckverfahren aufgebracht werden.

Insbesondere zeichnet sich die Erfindung dadurch aus, daß die Membran auf einer Halterung wie auf einem vorzugsweise aus Glasfritte bestehenden Ring befestigt ist, daß die Membran die Halterung peripher überragt und daß die Kompensationswiderstände auf dem peripheren Randbereich der Membran angeordnet sind.

Nach einer Ausgestaltung der Erfindung ist vorgesehen, daß die Kompensationswiderstände auf der Membran oberhalb der Halterung, als vorzugsweise aus Glasfritte bestehenden Rings angeordnet sind. Nach einer weiteren Ausgestaltung der Erfindung ist vorgesehen, daß die Kompensationswiderstände und die Brückenschaltung auf verschiedenen Seiten der gleichen Membran angeordnet sind. Die dabei erforderliche Kontaktierung der Vorder- und Rückseite einer dünnen Membran ist vergleichsweise einfach und Stand der Technk. Auch durch all diese Maßnahme ist sichergestellt, daß mechanische Einwirkungen auf die Membran nicht zu einer Beeinflussung der Kompensationswiderstände und damit zu deren elektrischen Werte führen kann.

Als vorteilhaft hat sich erwiesen, wenn die Kompensationswiderstände nicht gleichmäßig im Randbereich der Membran, also in deren inaktiven Bereich verteilt sind. Bevorzugterweise sind die den Temperaturgang und die das Nullsignal kompensierenden Widerstände in diametral zueinander verlaufenden Randbereichen der Membran angeordnet.

Weitere Einzelheiten, Vorteile und Merkmale der Erfindung ergeben sich nicht nur aus den Schutzansprüchen, den diesen zu entnehmenden Merkmalen -für sich und/oder in Kombination-, sondern auch aus der nachfolgenden Beschreibung eines der Zeichnung zu entnehmenden bevorzugten Ausführungsbeispiels.

Es zeigen:

Fig. 1    eine Schnittdarstellung durch einen ersten Drucksensor,

Fig. 2    der Drucksensor nach Fig. 1 in Draufsicht,

Fig. 3    ein elektrisches Schaltbild,

Fig. 4    eine Schnittdarstellung durch einen weiteren Drucksensor,

Fig. 5    der Drucksensor nach Fig. 4 in Draufsicht und

Fig. 6    eine weitere Variante eines Drucksensors.

In den Fig. sind gleiche Elemente mit gleichen Bezugszeichen versehen. So ist rein schematisch ein Drucksensor (10) dargestellt, der aus einer starren Platte (12) als Basiskörper, einem vorzugsweise aus Glasfritte bestehendem Haltering (14) und einer auf diesem angeordneten Membran (16) aufgebaut ist. Auf der Membran (16) sind zu einer Wheatstone'schen Brücke Widerstände (18), (20), (22) und (24) verschaltet. Diese sind auf dem aktiven Bereich (17) der Membran (16) angeordnet, also auf dem Bereich, der sich durch Druckeinwirkung mechanisch verformt.

Bei den Widerständen (18), (20), (22) und (24) handelt es sich um Dehnmeßstreifen, und zwar um Dickfilm-Dehnmeßstreifen wie sie der DE-OS 29 40 441 zu entnehmen sind. Die Widerstände (18), (20), (22) und (24) sind im Siebdruckverfahren auf die Membran (16) aufgebracht und können als Basisbestandteil ein oder mehrere der folgenden Substanzen enthalten: $RuO_2$, $IrO_2$, $TlO_2$, $Bi_2Ru_2O_7$, $Pb_2RU_2O_7$, Au, Pt, Pd und deren Legierungen.

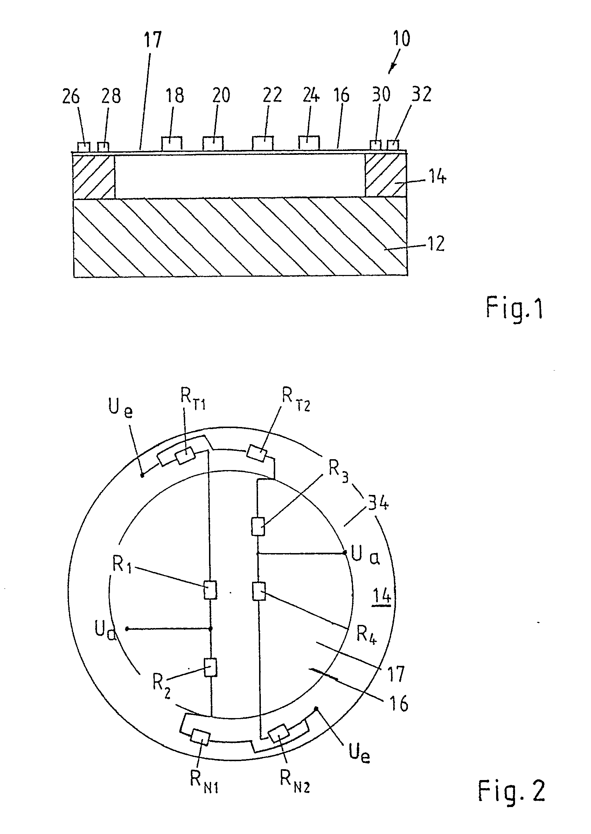

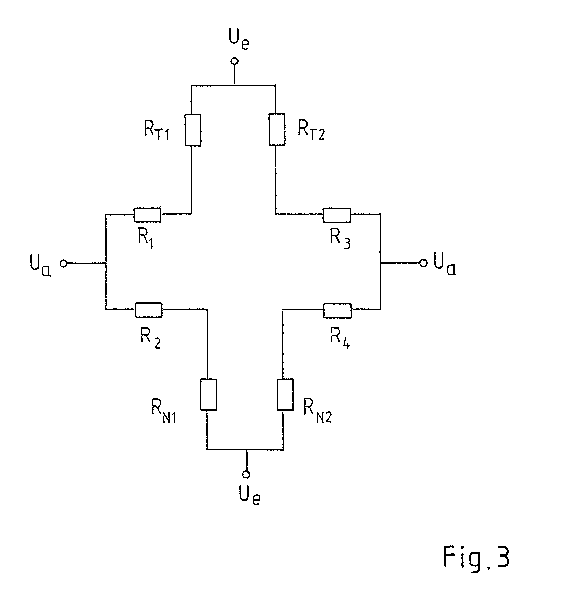

Wirkt nun auf die Membran (16) eine Kraft, so wird die Membran (16) in ihrem aktiven Bereich (17) verformt. Diese Verformung wird auf die Dickfilm-Dehnmeßstreifen (18), (20), (22) und (24) übertragen, so daß sich deren Widerstandswerte verändern. Hierdurch bedingt wird die über die Anschlüsse $U_e$ versorgte Wheatstone'sche Brücke verstimmt, wodurch sich ein Signal an den Ausgängen $U_a$ einstellt, welches Rückschlüsse auf die auf die Membran (16) einwirkende Kraft zuläßt. Die in Fig. 1 mit den Bezugszeichen (18), (20), (22) und (24) versehenen und rein prinzipiell dargestellten Widerstände sind in den Fig. 2 und 3 als $R_1$, $R_2$, $R_3$ und $R_4$ bezeichnet. Die Anordnung der Widerstände $R_1$, $R_2$, $R_3$ und $R_4$ erfolgt in gewohnter Weise, um so mechanische Verformungen der Membran (16) im erforderlichen Umfang zu erfassen.

Um auch bezüglich Temperaturgang und Nullsignal eine abgeglichene Wheatstone'sche Brücke zu erhalten, sind Kompensationswiderstände (26), (28), (30), (32) (Fig. 1) bzw. $R_{T1}$, $R_{T2}$, $R_{N1}$ und $R_{N2}$ - (Fig. 3) vorgesehen. Damit sich jedoch deren Widerstandswerte nicht durch die mechanische Verformung der Membran (16) verändern, sind die Widerstände (26), (28), (30), (32) in den nicht aktiven Bereichen der Membran (16) angeordnet. Diese nicht aktiven Bereiche liegen erkennbar oberhalb der Befestigung (14), also des vorzugsweise aus Glas bestehenden Ringes und der in Fig. 2 mit dem Bezugszeichen (34) versehen ist. Durch das Anordnen der Kompensationswiderstände (26), (28), (30) und (32) können folglich sämtliche Widerstände der Wheatstone'schen Brücke als Einheit im Siebdruckverfahren angebracht werden, ohne daß die nach dem Stand der Technik erforderlichen Durchkontaktierungen des Befestigungsringes (14) und der Basisplatte (12) oder ähnliches erforderlich sind.

Wie die Fig. 2 verdeutlicht, sind dabei die den Temperaturgang beeinflussenden Kompensationswiderstände $R_{T1}$ und $R_{T2}$ diametral zu den das Nullsignal betreffenden Kompensationswiderständen $R_{N1}$ und $R_{N2}$ angeordnet.

Selbstverständlich sind andere Anordnungen gleichfalls möglich, insbesondere eine gleichmäßige Verteilung der Kompensationswiderstände über den inaktiven Bereich (34) der Membran (16). Allerdings hat sich die den Zeichnungen zu entnehmende Darstellung als besonders bevorzugt gezeigt.

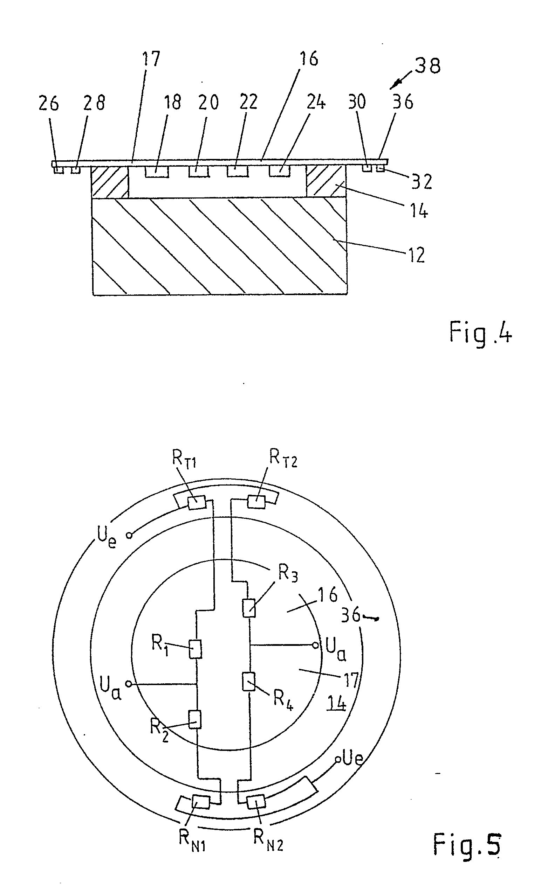

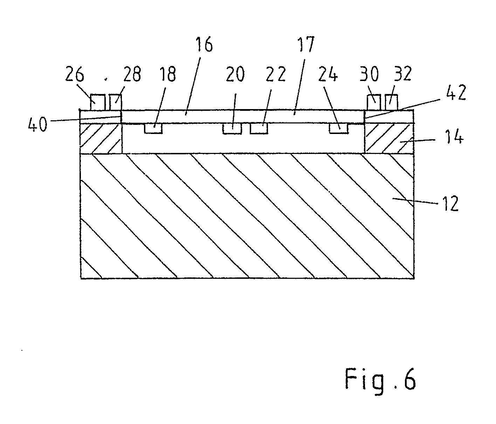

Den Fig. 4 und 5 ist eine hervorzuhebende Ausführungsform eines erfindungsgemäßen Drucksensors zu entnehmen, der vom Aufbau dem der Fig. 1 und 2 und in bezug auf die Verschaltung der Widerstände der Fig. 3 entspricht. So ist die Membran (16) über eine ringförmig ausgebildete Glasfritte (14) mit der starren Platte (12) verbunden. Im aktiven Bereich (17) der Membran (16), also innerhalb der Befestigung bzw. Halterung (14) sind die zu einer Wheatstone'schen Brücke verschalteten Widerstände (18), (20), (22) und (24) angeordnet. Dabei sind die Widerstände (18), (20), (22), (24) auf der der starren Platte (12) zugewandten Fläche der Membran (16) - vorzugsweise im Siebdruckverfahren - aufgebracht, so daß diese durch die Membran (16) selbst geschützt sind.

Die Membran (16) weist eine Fläche auf, die größer als die durch die Halterung bzw. den Glasfrittenring (14) begrenzte Fläche ist. Mit anderen Worten ragt die Membran (16) mit einem vorzugsweise ringförmigen Rand (36) seitlich über die Halterung (14) nach außen hervor, so daß sich für den Drucksensor (38) gemäß der Fig. 4 und 5 im Schnitt eine Hut-Form ergibt, bei der die Krempe von dem ringförmigen Rand (36) der Membran (16) gebildet ist.

Auf diesem ringförmigen Rand (36), und zwar auf der Seite, auf der die Widerstände (18), (20), (22) und (24) befestigt sind, sind die Kompensationswiderstände (26), (28), (30) und (32) angeordnet. Hierdurch ergibt sich der Vorteil, daß die Kompensationswiderstände (26), (28), (30), (32) gleichzeitig mit den die mechanische Verformung ermittelnden Widerständen (18), (20), (22), (24) z.B. im Siebdruckverfahren auf die Membran (16) aufgebracht werden können. Selbstverständlich besteht auch die Möglichkeit, sämtliche Widerstände auf der freien Fläche der Membran (16) anzuordnen.

Der Fig. 6 ist eine Alternative zu der Ausführungsform der Fig. 1 zu entnehmen. So sind die Kompensationswiderstände (26), (28), (30), (32) oberhalb der ringförmigen Halterung (14) angeordnet, wohingegen die die Wheatstone'sche Brücke bildenden Widerstände (18, (20), (22), (24) auf der gegenüberliegenden Seite der Membran (16), also abgeschirmt angeordnet sind. Zwar ergibt sich durch diese Ausbildung, die Durchkontaktierungen (40), (42) erforderlich macht, ein höherer Aufwand bei der Herstellung, der jedoch durch die Gewinnung eines weniger zerbrechlichen Drucksensors gerechtfertigt ist. Ansonsten zeigt der Drucksensor der Fig. 6 den prinzipiellen Aufbau der Fig. 1.

Das Schaltbild der mit den Kompensationswiderständen und den die mechanische Verformung der Membran (16) erfassenden Widerständen ist der Fig. 3 noch einmal zu entnehmen. Durch Laser-Trimmung der Widerstände $(R_{T1})$, $(R_{T2})$, $(R_{N1})$ und $(R_{N2})$ läßt sich die Brücke bezüglich Nullsignal und Temperaturgang abgleichen. Jeder dieser Widerstände kann selbstverständlich auch durch eine Serien- und/oder Parallelschaltung von Widerständen ersetzt werden. Somit läßt sich ein größerer Trimmbereich abdecken.

Jede beliebige ander Kompensationsschaltung, wie sie z.B. in R. Kaufmann, Meßwertaufnehmer auf DMS-Basis und ihr Temperaturverhalten, Messen und Prüfen, Dezember 1983, beschrieben wird, ist natürlich auch denkbar.

**Patentansprüche**

1. Drucksensor mit auf einer Membran angeordneten Dickfilm-Dehnmeßstreifen, die zu vorzugsweise einer Wheatstone'schen Brücke verschaltet sind, wobei Zweige der Brückenschaltung Kompensationswiderstände aufweisen, die auf dem Drucksensor angeordnet sind,
   **dadurch gekennzeichnet,**
   daß die Kompensationswiderstände (26, 28,

30, 32, $R_{T1}$, $R_{T2}$, $R_{N1}$, $R_{N2}$) auf der Membran (16) außerhalb des aktiven Bereichs (17) der Membran angeordnet sind.

2. Drucksensor nach Anspruch 1,
   **dadurch gekennzeichnet,**
   daß die Membran (16) auf einer Halterung wie auf einem vorzugsweise aus Glasfritte bestehenden Ring (14) befestigt ist, daß die Membran die Halterung peripher überragt und daß die Kompensationswiderstände (26, 28, 30, 32, $R_{T1}$, $R_{T2}$, $R_{N1}$, $R_{N2}$) auf dem peripheren Randbereich der Membran (36) angeordnet sind.

3. Drucksensor nach Anspruch 1,
   **dadurch gekennzeichnet,**
   daß die Kompensationswiderstände (26, 28, 30, 32, $R_{T1}$, $R_{T2}$, $R_{N1}$, $R_{N2}$) auf der Membran (16) oberhalb deren Halterung (14) angeordnet sind.

4. Drucksensor nach zumindest Anspruch 1,
   **dadurch gekennzeichnet,**
   daß der Membran (16) einen die Halterung ringförmig überstehenden Rand (36) aufweist, auf dem Kompensationswiderstände (26, 28, 30, 32, $R_{T1}$, $R_{T2}$, $R_{N1}$, $R_{N2}$) angeordnet sind.

5. Drucksensor nach zumindest einem der vorhergehenden Ansprüche,
   **dadurch gekennzeichnet,**
   daß die zu einer Brückenschaltung verschalteten Dickfilm-schicht-Widerstände (18, 20, 22, 24, 26, 28, 30, 32) mit den Kompensationswiderständen vorzugsweise auf der selben Seite der Membran (16) im Siebdruckverfahren aufgebracht sind.

6. Drucksensor nach zumindest einem der vorhergehenden Ansprüche,
   **dadurch gekennzeichnet,**
   daß die Brückenschaltung sowohl Temperaturgang- als auch Nullsignal-Kompensationswiderstände ($R_{T1}$, $R_{T2}$, $R_{N1}$, $R_{N2}$) aufweist, die auf diametral gegenüberliegenden Randbereichen (34, 36) der Membran (16) angeordnet sind.

7. Drucksensor nach zumindest einem der vorhergehenden Ansprüche,
   **dadurch gekennzeichnet,**
   daß die Kompensationswiderstände (26, 28, 30, 32) oberhalb der Halterung und die die Brückenschaltung bildenden Widerstände (18, 20, 22, 24) auf der gegenüberliegenden Seite der Membran (16) angeordnet sind.

Fig.1

Fig. 2

5

Fig.3

Fig.4

Fig.5

Fig.6